# EUROPEAN PATENT APPLICATION

(11) **EP 3 813 028 A1**
(43) Date of publication of application: **28.04.2021**
(21) Application number: 19875970.6
(22) Date of filing: 24.07.2019
(51) Int. Cl.: G07B 15/02

(54) **EVIDENCE KEEPING METHOD AND APPARATUS FOR OWED PARKING FEES, REMINDING METHOD AND DEVICE FOR OWED PARKING FEES, AND ELECTRONIC DEVICE**

(30) Priority: 26.10.2018 CN 201811260936
(71) Applicant: Advanced New Technologies Co., Ltd., George Town, Grand Cayman KY1-9008 (KY)
(72) Inventor: JIANG, Guofei, Hangzhou, Zhejiang 310000 (CN); LIN, Guangyu, Hangzhou, Zhejiang 310000 (CN)
(74) Representative: Goddar, Heinz J.
(86) International application number: PCT/CN2019/097508
(87) International publication number: WO 2020/082832

(57) **Abstract**

One or more embodiments of the present specification provide an overdue parking fee recordation method and apparatus, an overdue parking fee reminding method and apparatus, and an electronic device that are applied to a parking fee collection system. The recordation method includes: detecting parking information of a vehicle in a parking environment by using an IoT device associated with the parking fee collection system; determining parking fee payment information of the vehicle when the parking information indicates that the vehicle exits the parking environment; when the parking fee payment information indicates that fee payment for the vehicle is uncompleted, publishing an overdue fee record related to the vehicle to a blockchain network by using a first blockchain node corresponding to the parking fee collection system in the blockchain network.

## Description

### TECHNICAL FIELD

One or more embodiments of the present specification relate to the field of blockchain technologies, and in particular, to overdue parking fee recordation methods and apparatuses, overdue parking fee reminding methods and apparatuses, and electronic devices.

### BACKGROUND

Parking lots can provide parking services to users for fees, and the user needs to pay a corresponding amount of fees to the parking lot based on parking duration of a vehicle in a parking environment for management and maintenance of the parking lot. Some parking lots have special divided areas, and a unified entrance and exit can be disposed for management and collection. The other parking lots such as roadside parking lots are in an open state, and an entrance and exit cannot be disposed or are difficult to be disposed in these parking lots. The user needs to actively cooperate with a collection employee to pay a parking fee or pay a parking fee through self-service payment.

### SUMMARY

In view of this, one or more embodiments of the present specification provide overdue parking fee recordation methods and apparatuses, overdue parking fee reminding methods and apparatuses, and electronic devices.

To achieve the previous objective, one or more embodiments of the present specification provide the following technical solutions:

According to a first aspect of one or more embodiments of the present specification, an overdue parking fee recordation method is provided and can be applied to a parking fee collection system. The method includes the following: parking information of a vehicle in a parking environment is detected by using an IoT device associated with the parking fee collection system; parking fee payment information of the vehicle is determined when the parking information indicates that the vehicle exits the parking environment; and when the parking fee payment information indicates that fee payment for the vehicle is uncompleted, an overdue fee record related to the vehicle is published to a blockchain network by using a first blockchain node corresponding to the parking fee collection system in the blockchain network.

According to a second aspect of one or more embodiments of the present specification, an overdue parking fee reminding method is provided and is applied to a parking fee collection system. The method includes the following: parking information of a vehicle in a parking environment is detected by using an IoT device associated with the parking fee collection system; an unresolved overdue fee record related to the vehicle in a blockchain network is queried about when the parking information indicates that the vehicle enters the parking environment, where a publisher of the overdue fee record includes at least one of the following: a first blockchain node corresponding to the parking fee collection system, and a second blockchain node corresponding to another parking fee collection system different from the parking fee collection system; and an overdue fee reminder is sent to a handheld fee collection terminal device used by a parking fee collection company employee when the unresolved overdue fee record related to the vehicle is retrieved in the blockchain network.

According to a third aspect of one or more embodiments of the present specification, an overdue parking fee recordation apparatus is provided and is applied to a parking fee collection system. The apparatus includes: a detection unit, configured to detect parking information of a vehicle in a parking environment by using an IoT device associated with the parking fee collection system; a determining unit, configured to determine parking fee payment information of the vehicle when the parking information indicates that the vehicle exits the parking environment; and a publishing unit, configured to: when the parking fee payment information indicates that fee payment for the vehicle is uncompleted, publish an overdue fee record related to the vehicle to a blockchain network by using a first blockchain node corresponding to the parking fee collection system in the blockchain network.

According to a fourth aspect of one or more embodiments of the present specification, an overdue parking fee reminding apparatus is provided and is applied to a parking fee collection system. The apparatus includes: a detection unit, configured to detect parking information of a vehicle in a parking environment by using an IoT device associated with the parking fee collection system; a query unit, configured to query about an unresolved overdue fee record related to the vehicle in a blockchain network when the parking information indicates that the vehicle enters the parking environment, where a publisher of the overdue fee record includes at least one of the following: a first blockchain node corresponding to the parking fee collection system, and a second blockchain node corresponding to another parking fee collection system different from the parking fee collection system; and a reminding unit, configured to send an overdue fee reminder to a handheld fee collection terminal device used by a collection employee when the unresolved overdue fee record related to the vehicle is retrieved in the blockchain network.

According to a fifth aspect of one or more embodiments of the present specification, an electronic device is provided, including: a processor; and a memory, configured to store an instruction that can be executed by the processor.

The processor runs the executable instructions to implement the above described method according any of the embodiments.

### BRIEF DESCRIPTION OF DRAWINGS

FIG. 1 is a flowchart illustrating an overdue parking fee recordation method, according to an example embodiment;
FIG. 2 is a flowchart illustrating an overdue parking fee reminding method, according to an example embodiment;
FIG. 3 is a schematic interaction diagram illustrating a type of parking overdue parking fee management, according to an example embodiment;
FIG. 4 is a schematic interaction diagram illustrating another type of parking overdue parking fee management, according to an example embodiment;
FIG. 5 is a schematic interaction diagram illustrating a parking environment management solution based on an overdue parking fee status, according to an example embodiment;
FIG. 6 is a schematic interaction diagram illustrating another parking environment management solution based on an overdue parking fee status, according to an example embodiment;
FIG. 7 is a schematic structural diagram illustrating a device, according to an example embodiment;
FIG. 8 is a block diagram illustrating an overdue parking fee recordation apparatus, according to an example embodiment;
FIG. 9 is a schematic structural diagram illustrating another device, according to an example embodiment; and
FIG. 10 is a block diagram illustrating an overdue parking fee reminding apparatus, according to an example embodiment.

### DESCRIPTION OF IMPLEMENTATIONS

Example embodiments are described in detail here, and examples of the example embodiments are presented in the accompanying drawings. When the following descriptions relate to the accompanying drawings, unless specified otherwise, same numbers in different accompanying drawings represent same or similar elements. Example implementations described in the following example embodiments do not represent all implementations consistent with the one or more embodiments of the present specification. On the contrary, the embodiments are only examples of the apparatuses and methods that are described in the appended claims in detail and consistent with some aspects of one or more embodiments of the present specification.

It is worthwhile to note that steps of a corresponding method are not necessarily performed in a sequence shown and described in the present specification in another embodiment. In some other embodiments, the method can include steps more or less than those described in the present specification. In addition, a single step described in the present specification may be divided into a plurality of steps for description in another embodiment. However, the plurality of steps described in the present specification may also be combined into a single step for description in another embodiment.

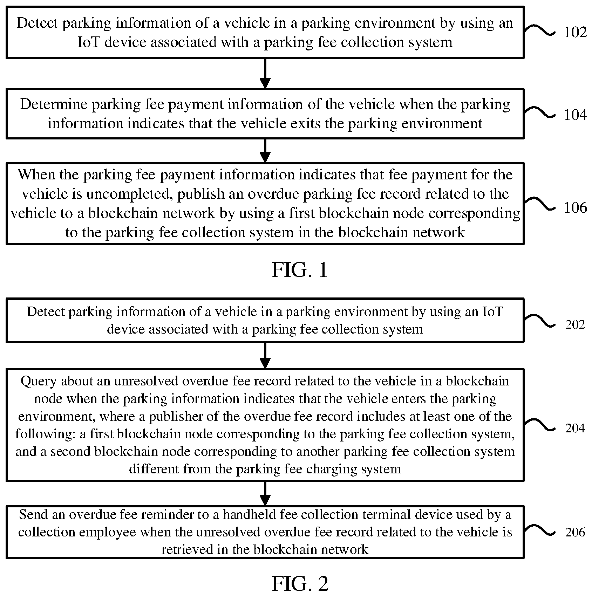

FIG. 1 is a flowchart illustrating an overdue parking fee recordation method, according to an example embodiment. As shown in FIG. 1, the method is applied to a parking fee collection system, and can include the following steps:
Step 102: Detect parking information of a vehicle in a parking environment by using an IoT device associated with the parking fee collection system.

In some embodiments, the parking fee collection system can be a physical server including an independent host, or the parking fee collection system can be a virtual server carried in a host cluster. This is not limited in the present specification.

In some embodiments, the Internet of Things (IoT) device can be implemented as at least any one of the following types of electronic devices: a monitoring device, a radio frequency identification (RFID) reader, a Bluetooth device, an optical sensor, a signal receiver, etc. This is not limited in the present specification. Each IoT device can detect one or more parking environments, and the parking fee collection system can manage one or more IoT devices, to detect a corresponding parking environment and implement an overdue parking fee recordation solution based on the present specification.

In some embodiments, a connection can be established between the IoT device and the parking fee collection system by using various types of wired or wireless networks. This is not limited in the present specification.

Step 104: Determine parking fee payment information of the vehicle when the parking information indicates that the vehicle exits the parking environment.

In some embodiments, on the one hand, the parking fee collection system detects the parking information of the vehicle by using the IoT device, and on the other hand, determines the parking fee payment information of the vehicle, so as to determine whether the vehicle is associated with any overdue parking fees. For example, when the vehicle exits the parking environment, the parking fee collection system can determine that the vehicle is associated with any overdue parking fees if the parking fee payment information indicates that fee payment for the vehicle is uncompleted. For another example, the parking fee collection system can start a timer of predetermined duration when the vehicle exits the parking environment. When the timer expires, the parking fee collection system can determine that the vehicle is associated with any overdue parking fees if the parking fee payment information indicates that fee payment for the vehicle is uncompleted.

In some embodiments, there are a plurality of methods for paying a parking fee. The method is not limited in the present specification provided that the parking fee collection system can receive corresponding parking fee payment information. For example, a collection code corresponding to the parking fee collection system on a payment platform can be set in the parking environment, so that a person on the vehicle can implement self-service payment by scanning the code, and the parking fee collection system can receive corresponding parking fee payment information from the payment platform. For another example, a camera connected to a payment platform can be disposed in the parking environment, so that a person on the vehicle can implement self-service payment through face recognition, and the parking fee collection system can receive corresponding parking payment information from the payment platform. For another example, a collection employee can charge a person on the vehicle for a parking fee by using a handheld fee collection terminal device, and the handheld fee collection terminal device sends corresponding parking fee payment information to the parking fee collection system.

Step 106: When the parking fee payment information indicates that fee payment for the vehicle is uncompleted, publish an overdue fee record related to the vehicle to a blockchain network by using a first blockchain node corresponding to the parking fee collection system in the blockchain network.

In some embodiments, the person on the vehicle possibly fail to pay a parking fee in time when exiting the parking environment due to subjective intention, objective oblivion, etc. As a result, the vehicle is associated with any overdue parking fees. In particular, when an exit railing in a parking lot is damaged, or when the parking environment is in an open parking lot, the vehicle is more prone to be associated with any overdue parking fees.

In some embodiments, transfers in the blockchain network are divided into a transfer in a narrow sense and a transfer in a general sense. The transfer in narrow sense is a value transfer published by a user to the blockchain network. For example, in a conventional bitcoin blockchain network, a transfer can be a transfer initiated by the user in the blockchain network. The transfer in general sense is service data that is published by the user to the blockchain network and that has a service intention. For example, an operator can establish a consortium blockchain based on actual service needs, and deploy some other types of online services (for example, an overdue parking fee management service, a housing renting service, a vehicle scheduling service, an insurance claim service, a credit service, and a medical service) unrelated to a value transfer based on the consortium blockchain. In such a consortium blockchain, a transfer can be a service message or a service request that is published by the user in the consortium blockchain and that has a service intention.

For example, when the parking fee collection system has a corresponding first blockchain node in the blockchain network, the parking fee collection system can submit a transfer to the blockchain network based on the first blockchain node. The transfer includes the overdue fee record related to the vehicle. Because data registered in the blockchain network is untampered with and traceable, so that the overdue fee record recorded in a blockchain ledger has sufficient reliability and can be trusted by each blockchain node. Therefore, the overdue fee record can be used as a strong evidence to chase money from the user in subsequent tracing.

In some embodiments, in the present specification, a license plate number can be used to represent each vehicle, or a person on a vehicle can be used to represent the vehicle, or other information can be used to represent each vehicle. This is not limited in the present specification.

In some embodiments, after the vehicle enters the parking environment, the collection employee can scan and identify the vehicle by using the handheld fee collection terminal device, or the IoT device can scan and identify the vehicle, and then notify the handheld fee collection terminal device of an identification result. The collection employee can initiate a query request for the vehicle to the parking fee collection system based on the handheld fee collection terminal device, and the parking fee collection system can query whether an unresolved overdue fee record related to the vehicle exists in the blockchain network based on the query request. When determining that the unresolved overdue fee record related to the vehicle exists, the parking fee collection system sends an overdue fee reminder to the handheld fee collection terminal device, so that the collection employee can tell an overdue parking fee status to the person on the vehicle, and urge the person to pay an unpaid parking fee, or the collection employee can charge the person on the vehicle for an unpaid parking fee by using the handheld fee collection terminal device.

In some embodiments, when the parking information indicates that the vehicle enters the parking environment, the parking fee collection system can query about an unresolved overdue fee record related to the vehicle in the blockchain network. When retrieving that the unresolved overdue fee record related to the vehicle exists in the blockchain network, the parking fee collection system can send an overdue fee reminder to the handheld fee collection terminal device, so that the collection employee can report an overdue parking fee status to the person on the vehicle, and urge the person to pay an unpaid parking fee, or the collection employee can collect an unpaid parking fee from the person on the vehicle by using the handheld fee collection terminal device.

In some embodiments, when the parking fee collection system publishes an overdue fee record of the vehicle to the blockchain network, the overdue fee record is marked as an unresolved state by default. After receiving the repaid fee related to the overdue fee record, the parking fee collection system can determine that the unpaid parking fee is paid, so that the corresponding overdue fee record can be marked as a resolved state. For example, the parking fee collection system can submit a transfer to the blockchain network by using the first blockchain node, and the transfer is used to mark the overdue fee record as a resolved state. Therefore, when querying about an overdue fee record in the blockchain network, the parking fee collection system should select the latest transfer content of the overdue fee record, and determine, based on a status marked in the transfer content, whether the overdue fee record is in an unresolved state or a resolved state.

In some embodiments, the overdue fee record related to the vehicle retrieved by the parking fee collection system by using the first blockchain node can include not only an overdue fee record published by the first blockchain node to the blockchain network but also an overdue fee record related to the vehicle published by a second blockchain node. The second blockchain node corresponds to another parking fee collection system different from the parking fee collection system. In other words, a plurality of parking fee collection systems can be separately configured as a plurality of blockchain nodes in the same blockchain network. The parking fee collection systems can separately publish overdue fee records to the blockchain network by using the blockchain nodes corresponding to the parking fee collection systems. Because the overdue fee records can be separately recorded in blockchain ledgers that are separately maintained by the blockchain nodes and have the same content, the overdue fee record published by each blockchain node can be shared between all the blockchain nodes, which is equivalent to establishing a credit consortium between the plurality of parking fee collection systems. Through sharing of the overdue fee record, an overdue parking fee behavior of a vehicle can be jointly monitored and managed, so as to help a vehicle owner find an unpaid parking fee and repaid the fee as soon as possible, thereby helping attack a malicious overdue parking fee.

In some embodiments, when the IoT device detects that parking duration of the vehicle in the parking environment reaches predetermined duration or detects that the vehicle shows a desire to enter the parking environment, or when the vehicle satisfies another determining condition, it can be determined that the vehicle has a need for parking in the parking environment, and the parking fee collection system can query about an unresolved overdue fee record related to the vehicle in the blockchain network. When a quantity of overdue fee records of the vehicle reaches a first quantity and/or an unpaid fee reaches a second quantity, it indicates that an overdue parking fee phenomenon of the vehicle is relatively serious, and fee payment is not accidentally forgotten, that is, a user of the vehicle has a relatively poor credit in terms of parking fee payment. Therefore, the parking fee collection system can set a barring facility in the parking environment to an enabled state to prevent the vehicle from entering the parking environment, and thereby avoiding continuing to cause a loss. When the quantity of overdue fee records of the vehicle does not reach the first quantity and the unpaid fee does not reach the second quantity, the parking fee collection system can set the barring facility to a disabled state to enable the vehicle to enter the parking environment.

In some embodiments, the parking fee collection system can invoke a smart contract by using the corresponding first blockchain node. The smart contract is used to collect statistics on unresolved overdue fee records related to the vehicle in the blockchain network, set a credit value of the vehicle based on a statistical result, and publishes the credit value of the vehicle to the blockchain network. The credit value is negatively correlated with a quantity of collected overdue fee records and/or an unpaid amount, that is, a more severe overdue parking fee phenomenon indicates a lower credit value.

In some embodiments, when the IoT device detects a parking need of the vehicle for the parking environment, the parking fee collection system can query a credit value of the vehicle. The parking fee collection system can set a barring facility in the parking environment to an enabled state to prevent the vehicle from entering the parking environment when the credit value of the vehicle is not greater than a predetermined value. When the credit value of the vehicle is greater than the predetermined value, The parking fee collection system can set the barring facility to a disabled state to enable the vehicle to enter the parking environment when the credit value of the vehicle is greater than the predetermined value.

In some embodiments, the barring facility can prevent the vehicle from entering the parking environment in an enabled state, and can enable the vehicle to enter the parking environment in a disabled state. Therefore, the barring facility can be used to control use of the parking environment of the vehicle. Any type of facility structure, such as a wheel lock, a lifting pile, or a railing, can be used as the barring facility. This is not limited in the present specification.

FIG. 2 is a flowchart illustrating an overdue parking fee reminding method, according to an example embodiment. As shown in FIG. 2, the method is applied to a parking fee collection system, and can include the following steps:
Step 202: Detect parking information of a vehicle in a parking environment by using an IoT device associated with the parking fee collection system.

In some embodiments, for step 202, reference can be made to step 102 and related descriptions in the embodiment shown in FIG. 1. Details are omitted here for simplicity.

Step 204: Query about an unresolved overdue fee record related to the vehicle in a blockchain network when the parking information indicates that the vehicle enters the parking environment, where a publisher of the overdue fee record includes at least one of the following: a first blockchain node corresponding to the parking fee collection system, and a second blockchain node corresponding to another parking fee collection system different from the parking fee collection system.

Step 206: Send an overdue fee reminder to a handheld fee collection terminal device used by a collection employee when the unresolved overdue fee record related to the vehicle is retrieved in the blockchain network.

In some embodiments, in the present specification, a license plate number can be used to represent each vehicle, or a person on a vehicle can be used to represent the vehicle, or other information can be used to represent each vehicle. This is not limited in the present specification.

In some embodiments, after the vehicle enters the parking environment, the collection employee can scan and identify the vehicle by using the handheld fee collection terminal device, or the IoT device can scan and identify the vehicle, and then notify the handheld fee collection terminal device of an identification result. The collection employee can initiate a query request for the vehicle to the parking fee collection system based on the handheld fee collection terminal device, and the parking fee collection system can query whether an unresolved overdue fee record related to the vehicle exists in the blockchain network based on the query request. When determining that the unresolved overdue fee record related to the vehicle exists, the parking fee collection system sends an overdue fee reminder to the handheld fee collection terminal device, so that the collection employee can tell an overdue parking fee status to the person on the vehicle, and urge the person to pay an unpaid parking fee, or the collection employee can charge the person on the vehicle for an unpaid parking fee by using the handheld fee collection terminal device.

In some embodiments, when the parking information indicates that the vehicle enters the parking environment, the parking fee collection system can query about an unresolved overdue fee record related to the vehicle in the blockchain network. When retrieving that the unresolved overdue fee record related to the vehicle exists in the blockchain network, the parking fee collection system can send an overdue fee reminder to the handheld fee collection terminal device, so that the collection employee can report an overdue parking fee status to the person on the vehicle, and urge the person to pay an unpaid parking fee, or the collection employee can collect an unpaid parking fee from the person on the vehicle by using the handheld fee collection terminal device.

In some embodiments, when the parking fee collection system publishes an overdue fee record of the vehicle to the blockchain network, the overdue fee record is marked as an unresolved state by default. After receiving the repaid fee related to the overdue fee record, the parking fee collection system can determine that the unpaid parking fee is paid, so that the corresponding overdue fee record can be marked as a resolved state. For example, the parking fee collection system can submit a transfer to the blockchain network by using the first blockchain node, and the transfer is used to mark the overdue fee record as a resolved state. Therefore, when querying about an overdue fee record in the blockchain network, the parking fee collection system should select the latest transfer content of the overdue fee record, and determine, based on a status marked in the transfer content, whether the overdue fee record is in an unresolved state or a resolved state.

In some embodiments, the overdue fee record related to the vehicle retrieved by the parking fee collection system by using the first blockchain node can include not only an overdue fee record published by the first blockchain node to the blockchain network but also an overdue fee record related to the vehicle published by a second blockchain node. The second blockchain node corresponds to another parking fee collection system different from the parking fee collection system.In other words, a plurality of parking fee collection systems can be separately configured as a plurality of blockchain nodes in the same blockchain network. The parking fee collection systems can separately publish overdue fee records to the blockchain network by using the blockchain nodes corresponding to the parking fee collection systems. Because the overdue fee records can be separately recorded in blockchain ledgers that are separately maintained by the blockchain nodes and have the same content, the overdue fee record published by each blockchain node can be shared between all the blockchain nodes, which is equivalent to establishing a credit consortium between the plurality of parking fee collection systems. Through sharing of the overdue fee record, an overdue parking fee behavior of a vehicle can be jointly monitored and managed, so as to help a vehicle owner find an unpaid parking fee and repaid the fee as soon as possible, thereby helping attack a malicious overdue parking fee.

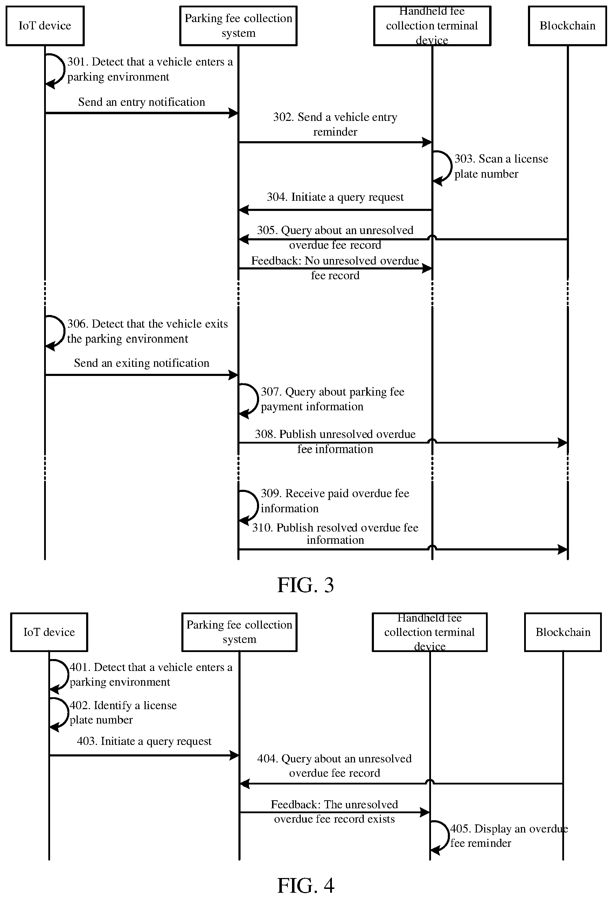

FIG. 3 is a schematic interaction diagram illustrating a type of parking overdue parking fee management, according to an example embodiment. Assumed that a parking fee collection system is disposed in an open parking lot, an IoT device is disposed in a parking environment in the open parking lot, and a collection employee is further provided in the open parking lot. The parking fee collection system can separately interact with the IoT device and a handheld fee collection terminal device used by the collection employee. In addition, the parking fee collection system is further configured as a blockchain node in a blockchain network. As shown in FIG. 3, an interaction process of parking overdue parking fee management can include the following steps:

Step 301: The IoT device sends an entry notification to the parking fee collection system when detecting that a vehicle enters the parking environment.

In some embodiments, the IoT device includes any electronic device that can be used to detect whether a vehicle enters or exits the parking environment. This is not limited in the present specification.

In some embodiments, the IoT device can be a monitoring device. The monitoring device can monitor one or more parking environments in the parking lot, and analyze whether a vehicle enters or exits the parking environment by using a monitoring image.

In some embodiments, the IoT device can be an RFID reader. Each parking environment in the parking lot can be assembled with an RFID reader, and a valid reading range of the RFID reader does not exceed the corresponding parking environment. Therefore, when a vehicle enters a parking environment, only the RFID reader assembled in the parking environment can activate an RFID tag on the vehicle, and therefore can determine whether the vehicle enters or exits the parking environment based on the RFID tag.

In some embodiments, the IoT device can include a distance measurement device. The distance measurement device can be installed at the top or another location in a parking environment, to measure a distance towards the ground of the parking environment. When a vehicle enters or exits the parking environment, a distance measurement result of the distance measurement device can be triggered to change, and therefore, it can be determined whether the vehicle enters or exits the parking environment based on the change.

Step 302: The parking fee collection system sends a vehicle entry reminder to the handheld fee collection terminal device of the collection employee.

In some embodiments, the vehicle entry reminder is sent so that the collection employee can determine whether a vehicle just enters the parking environment, so as to exclude misreporting of the IoT device. In addition, the vehicle entry reminder can provide remind the collection employee, so that the collection employee can get to the vehicle that just enters the parking environment in time, scan vehicle information by using the handheld fee collection terminal device, and determine a start parking moment of the vehicle, so as to calculate a parking fee of the vehicle.

Step 303: The handheld fee collection terminal device scans a license plate number of the vehicle.

In some embodiments, the license plate number can be used as vehicle information for distinguishing between different vehicles. Certainly, another type of information such as driver information can be used as the vehicle information. This is not limited in the present specification. For example, the collection employee can put a scanning end of the handheld fee collection terminal device towards a license plate location of the vehicle, so as to determine the license plate number of the vehicle by through processes such as image collection and content identification.

In some embodiments, a moment that the license plate number is retrieved can be used as the corresponding start moment that the vehicle is parked in the parking environment. Alternatively, based on a collection rule in the parking lot, for example, parking is free within half an hour, 30 minutes can be added based on the moment that the license plate number is retrieved, so as to be used as the start moment that the vehicle is parked.

Step 304: The handheld fee collection terminal device initiates a query request to the parking fee collection system.

In some embodiments, after the license plate number of the vehicle is retrieved, the handheld fee collection terminal device can initiate a query request to the parking fee collection system. The query request includes the retrieved license plate number, so that the parking fee collection system queries about a blockchain ledger to determine whether the blockchain ledger records an unresolved overdue fee record related to the vehicle number.

Step 305: The parking fee collection system returns related information to the handheld fee collection terminal device when the unresolved overdue fee record is not retrieved.

In some embodiments, when the parking fee collection system does not retrieve the unresolved overdue fee record related to the license plate number, the handheld fee collection terminal device can display "no overdue fee record" or similar content, so that the collection employee only needs to ensure that a person on the vehicle normally pays a current parking fee.

In some embodiments, that "the parking fee collection system does not retrieve the unresolved overdue fee record" can be understood as follows: The parking fee collection system does not retrieve an overdue fee record related to the license plate number, or although the parking fee collection system retrieves an overdue fee record related to the license plate number, the overdue fee record is marked as a resolved state, that is, the unpaid fee is repaid.

Step 306: The IoT device sends an exiting notification to the parking fee collection system when detecting that a vehicle exits the parking environment.

In some embodiments, a process that the IoT device detects that a vehicle exits the parking environment is similar to a process that the IoT detects that a vehicle enters the parking environment. Details are omitted here for simplicity.

Step 307: The parking fee collection system queries about parking fee payment information.

In some embodiments, the parking fee can be paid by using a parking fee payment solution in a related technology. This is not limited in the present specification. For example, the collection employee can notify a person on a vehicle of a parking fee, and the person on the vehicle can pay the parking fee in cash, through an electronic account transfer, or in another way. The collection employee reports the parking fee payment information to the parking fee collection system by using the handheld fee collection terminal device. For another example, the collection employee can notify a person on a vehicle of a parking fee, and the person on the vehicle can transfer the parking fee to an electronic account in the parking fee collection system by using an electronic account. As such, the parking fee collection system can determine corresponding parking fee payment information.

In some embodiments, when the vehicle exits the parking environment, the parking fee collection system can immediately query about the parking fee payment information. Based on a usual usage habit, the user usually exits the parking environment after paying the parking fee. Certainly, some users possibly pay the parking fee in a process of exiting the parking environment or after exiting the parking environment (especially when an electronic account transfer is used). Therefore, the parking fee collection system can wait for predetermined duration (for example, 15 minutes or 30 minutes) when failing to immediately query about the paid parking fee. The parking fee collection system can determine that the vehicle is associated with any overdue parking fees if the parking fee collection system still cannot retrieve the paid parking fee.

Step 308: When the vehicle is associated with any overdue parking fees, the parking fee collection system publishes unresolved overdue parking fee information related to the vehicle to a blockchain network.

In some embodiments, the parking fee collection system can submit a transfer to the blockchain network. The transfer includes information about the vehicle and overdue parking fee information of the vehicle (such as an unpaid amount, a parking time period, and parking lot information), and the transfer includes status information. The status information is set to an unresolved state by the parking fee collection system to indicate that the overdue parking fee information of the vehicle is unresolved. Because the blockchain network is traceable and untampered with, the transfer submitted by the parking fee collection system can be queried about by each blockchain node in a subsequent process, to determine authenticity of the overdue parking fee information.

Step 309: The parking fee collection system receives paid overdue fee information.

Step 310: The parking fee collection system publishes resolved overdue parking fee information to the blockchain network.

In some embodiments, a driver, an owner, or any user of a vehicle can repay a previously unpaid parking fee. The parking fee collection system can determine, based on received paid overdue fee information, whether an unpaid fee corresponding to the overdue parking fee information is paid, and publishes a transfer to the blockchain network if the parking fee collection system determines that the unpaid fee is paid. The transfer includes the vehicle information and the overdue parking fee information, and the status information in the transfer is set to a resolved state by the parking fee collection system to indicate that the overdue parking fee information is resolved.

Different from the embodiment shown in FIG. 3, the parking fee collection system possibly retrieve an unresolved overdue fee record related to a vehicle. Correspondingly, FIG. 4 is a schematic interaction diagram illustrating another type of parking overdue parking fee management, according to an example embodiment. As shown in FIG. 4, an interaction process of parking overdue parking fee management can include the following steps:

Step 401: The IoT device detects that a vehicle enters a parking environment.

Step 402: The IoT device identifies a license plate number of the vehicle.

In some embodiments, step 401 and step 402 can be separately implemented by different IoT devices, or step 401 and step 402 can be implemented by the same IoT device. This is not limited in the present specification.

For example, the IoT device can include an underground induction coil and a monitoring device. The underground induction coil can be installed underground or at another location in the parking environment. Therefore, the vehicle entering the parking environment can trigger the underground induction coil, so as to detect whether the vehicle enters or exits the parking environment. The monitoring device can monitor one or more parking environments in the parking lot, and identify the license plate number of the vehicle by using a monitoring image.

For another example, the IoT device can be an RFID reader. Each parking environment in the parking lot can be assembled with an RFID reader, and a valid reading range of the RFID reader does not exceed the corresponding parking environment. Therefore, when a vehicle enters a parking environment, only the RFID reader assembled in the parking environment can activate an RFID tag on the vehicle, and therefore can determine whether the vehicle enters or exits the parking environment based on the RFID tag. In addition, the RFID reader can receive an RFID signal sent by the RFID tag installed on the vehicle, and read a license plate number of the vehicle included in the RFID signal.

Step 403: The IoT device initiates a query request to the parking fee collection system.

In some embodiments, after identifying the license plate number of the vehicle, the IoT device can initiate a query request to the parking fee collection system. The query request includes the retrieved vehicle license plate number, so that the parking fee collection system queries about a blockchain ledger to determine whether the blockchain ledger records an unresolved overdue fee record related to the vehicle license plate number. Step 404: The parking fee collection system returns related information to the handheld fee collection terminal device when retrieving the unresolved overdue fee record related to the vehicle.

Step 405: The handheld fee collection terminal device displays an overdue fee reminder.

In some embodiments, when retrieving the unresolved overdue fee record related to the license plate number, the parking fee collection system can send the overdue fee reminder for the license plate number to the handheld fee collection terminal device, so that the collection employee can negotiate with a person on the vehicle, notify the collection employee of an overdue parking fee status, and urge the collection employee to repay the parking fee. The handheld fee collection terminal device can also temporarily generate a notification bill used for overdue parking fee reminding, and the collection employee can affix the notification bill to the vehicle or deliver the notification bill to the person on the vehicle. In this way, the notification can include a repayment link (which can be presented in a form of a two-dimensional code, etc.) of the parking fee, so that the person on the vehicle can repay the parking fee based on the notification bill.

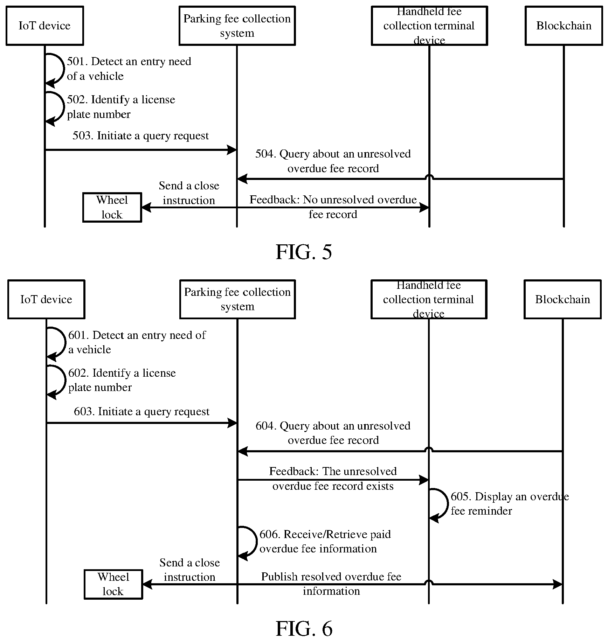

It is worthwhile to note the following:
1. The implementation that the handheld fee collection terminal device identifies the vehicle shown in FIG. 3 can also be applied to the embodiment shown in FIG. 4. Similarly, the implementation that the IoT device identifies the vehicle shown in FIG. 4 can also be applied to the embodiment shown in FIG. 3. Details are omitted here for simplicity.
2. A blockchain network used for parking charge management can be established between a plurality of parking fee collection systems, and a type of the blockchain network can be a consortium chain. Each parking fee collection system is configured as a blockchain node (that is, a consortium member) in the consortium chain, which is equivalent to forming a parking fee collection consortium between these parking fee collection systems. As such, each parking fee collection system can publish an overdue fee record of the vehicle to the blockchain for recordation by using the embodiment shown in FIG. 3. Based on a distributed accounting feature of the blockchain network, each parking fee collection system can query overdue fee records published by all the parking fee collection systems. That is, the information about the overdue fee record of the vehicle can also be shared between the parking fee collection systems. Therefore, regardless of a parking environment that the vehicle is in, an overdue parking fee reminding can be implemented by using the embodiment shown in FIG. 4, or parking management can be implemented by using the embodiments shown in FIG. 5 and FIG. 6.

Failure to pay the parking fee of the vehicle can affect subsequent use of the parking environment. In other words, an overdue parking fee status of the vehicle can be used as a credit evaluation for a related person, so as to determine, based on the credit evaluation, whether to allow the vehicle to continue to use the related parking environment. FIG. 5 is a schematic interaction diagram illustrating a parking environment management solution based on an overdue parking fee status, according to an example embodiment. As shown in FIG. 5, an interaction process of the parking environment management solution can include the following steps:

Step 501: An IoT device detects an entry need of a vehicle.

In some embodiments, the IoT device can detect an entry need of the vehicle for the parking environment in a plurality of methods. This is not limited in the present specification. For example, when duration that the vehicle stays near the parking environment reaches predetermined duration, it can be determined that the vehicle wants to enter the parking environment, that is, the vehicle has a need for entering the parking environment.

Step 502: The IoT device identifies a license plate number of the vehicle.

Step 503: The IoT device initiates a query request to a parking fee collection system.

In some embodiments, for steps 502 and 503, reference can be made to steps 402 and 403 in the embodiment shown in FIG. 4. Details are omitted here for simplicity.

Step 504: The parking fee collection system queries about an unresolved overdue fee record related to the vehicle in a blockchain network, and implements related processing.

In some embodiments, when the unresolved overdue fee record is not retrieved, on the one hand, the parking fee collection system sends feedback information of "no unresolved overdue fee record" to a handheld fee collection terminal device of a collection employee, and on the other hand, sends a close instruction to a wheel lock installed in the corresponding parking environment, so that the wheel lock switches from an open state to a closed state, and the vehicle can successfully enter the parking environment.

In some embodiments, when retrieving the unresolved overdue fee record related to the vehicle, the parking fee collection system can avoid sending a close instruction to the wheel lock, so that the wheel lock maintains an open state, thereby preventing the vehicle from entering the corresponding parking environment.

Certainly, in addition to the wheel lock, another type of barring facility can be installed in the parking environment, so as to implement use management of the related parking environment. This is not limited in the present specification.

FIG. 6 is a schematic interaction diagram illustrating another parking environment management solution based on an overdue parking fee status, according to an example embodiment. As shown in FIG. 6, an interaction process of the parking environment management solution can include the following steps:
Step 601: An IoT device detects an entry need of a vehicle.

Step 602: The IoT device identifies a license plate number of the vehicle.

Step 603: The IoT device initiates a query request to a parking fee collection system.

In some embodiments, for steps 601 to 603, reference can be made to steps 501 to 503 in the embodiment shown in FIG. 5. Details are omitted here for simplicity.

Step 604: The parking fee collection system queries about an unresolved overdue fee record related to the vehicle in a blockchain network, and feeds back this case to the handheld fee collection terminal device.

Step 605: The handheld fee collection terminal device displays an overdue fee reminder.

In some embodiments, the overdue fee reminder is sent to a handheld fee collection terminal device, so that a collection employee can negotiate with a person on the vehicle to notify the person of an overdue parking fee status and urge the person to repay the parking fee. The handheld fee collection terminal device can also temporarily generate a notification bill used for overdue parking fee reminding, and the collection employee can affix the notification bill to the vehicle or deliver the notification bill to the person on the vehicle. In this way, the notification can include a repayment link (which can be presented in a form of a two-dimensional code, etc.) of the parking fee, so that the person on the vehicle can repay the parking fee based on the notification bill.

In some embodiments, the person on the vehicle can immediately repay the parking fee based on the reminder of the collection employee or the provided repayment link, so that the vehicle can successfully use the related parking environment.

Step 606: The parking fee collection system receives or retrieves paid overdue fee information, and implements related processing.

In some embodiments, after receiving or retrieving the paid overdue fee information, on one hand, the parking fee collection system can send a close instruction to a wheel lock in the corresponding parking environment, so that the vehicle can successfully enter the parking environment, and on the other hand, can submit a transfer to the blockchain network. The transfer includes overdue parking fee information marked as a resolved state, so as to alleviate that the overdue parking fee information affects the above described parking of the vehicle in a subsequent process.

In some embodiments, logic used by the parking fee collection system to determine whether a vehicle can use a related parking environment can be as follows: A parking environment is not allowed to be used as long as there is an unresolved overdue fee record related to the vehicle, or a parking environment is not allowed to be used when the overdue parking fee payment exceeds an acceptable amount. For example, when a quantity of unresolved overdue fee records related to the vehicle reaches a predetermined quantity and/or an unpaid parking fee reaches a predetermined limit, it can be determined that the overdue parking fee payment exceeds an acceptable amount. When the quantity of overdue fee records does not reach the predetermined quantity and the unpaid parking fee does not reach the predetermined limit, it can be considered that the overdue parking fee payment is still within an acceptable amount.

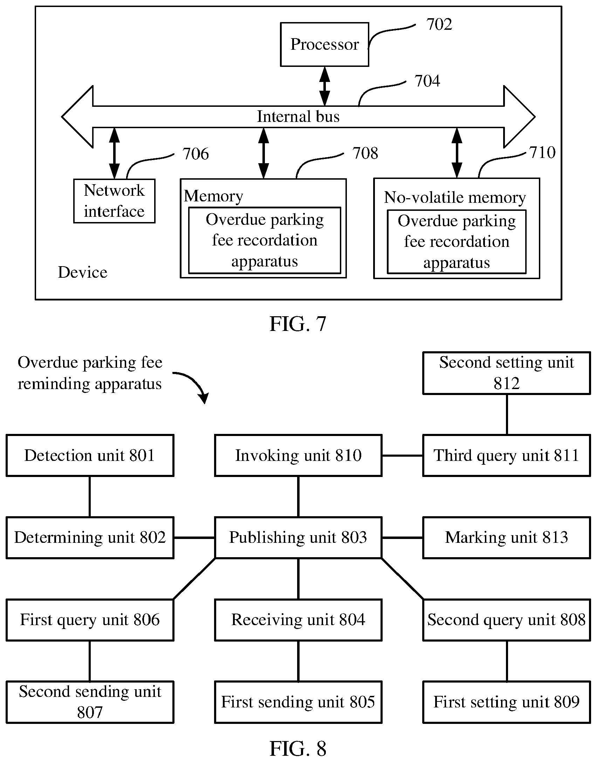

FIG. 7 is a schematic structural diagram illustrating a device, according to an example embodiment. Referring to FIG. 7, in terms of hardware, the device includes a processor 702, an internal bus 704, a network interface 706, a memory 708, and a non-volatile memory 710. Certainly, the device may further include hardware needed by another service. The processor 702 reads a corresponding computer program from the non-volatile memory 710 to the memory 708 for running, so as to logically form an overdue parking fee recordation apparatus. Certainly, in addition to a software implementation, one or more embodiments of the present specification do not exclude another implementation, such as a logical component or a combination of software and hardware. To be specific, an execution body of the following processing procedure is not limited to each logical unit, and can also be hardware or a logical component.

Referring to FIG. 8, in a software implementation, the overdue parking fee recordation apparatus is applied to a parking fee collection system. The apparatus can include: a detection unit 801, configured to detect parking information of a vehicle in a parking environment by using an IoT device associated with the parking fee collection system; a determining unit 802, configured to determine parking fee payment information of the vehicle when the parking information indicates that the vehicle exits the parking environment; and a publishing unit 803, configured to: when the parking fee payment information indicates that fee payment for the vehicle is uncompleted, publish an overdue fee record related to the vehicle to a blockchain network by using a first blockchain node corresponding to the parking fee collection system in the blockchain network.

Optionally, the apparatus further includes: a receiving unit 804, configured to receive a query request initiated for the vehicle by a handheld fee collection terminal device used by a collection employee; and a first sending unit 805, configured to send an overdue fee reminder to the handheld fee collection terminal device when an unresolved overdue fee record related to the vehicle is retrieved in the blockchain network.

Optionally, the apparatus further includes: a first query unit 806, configured to query about an unresolved overdue fee record related to the vehicle in the blockchain node when the parking information indicates that the vehicle enters the parking environment; and a second sending unit 807, configured to send an overdue fee reminder to a handheld fee collection terminal device used by a collection employee when the unresolved overdue fee record related to the vehicle is retrieved in the blockchain network.

Optionally, the apparatus further includes: a second query unit 808, configured to query about an unresolved overdue fee record related to the vehicle in the blockchain node when the IoT device detects a parking need of the vehicle for the parking environment; and a first setting unit 809, configured to: set a barring facility in the parking environment to an enabled state to prevent the vehicle from entering the parking environment when a quantity of overdue fee records of the vehicle reaches a first quantity and/or an unpaid amount reaches a second quantity; otherwise, set the barring facility to a disabled state to enable the vehicle to enter the parking environment.

Optionally, the apparatus further includes: an invoking unit 810, configured to invoke a smart contract, where the smart contract is used to collect statistics on unresolved overdue fee records related to the vehicle in the blockchain network, set a credit value of the vehicle based on a statistical result, and publish the credit value of the vehicle to the blockchain network, where the credit value is negatively correlated with a quantity of overdue fee records and/or an unpaid amount.

Optionally, the apparatus further includes: a third query unit 811, configured to query about the credit value of the vehicle when the IoT device detects a parking need of the vehicle for the parking environment; and a second setting unit 812, configured to set a barring facility in the parking environment to an enabled state to prevent the vehicle from entering the parking environment when the credit value of the vehicle is not greater than a predetermined value; otherwise, set the barring facility to a disabled state to enable the vehicle to enter the parking environment.

Optionally, the overdue fee record is marked as an unresolved state by default. The apparatus further includes: a marking unit 813, configured to mark the overdue fee record as a resolved state upon receipt of a repaid fee related to the overdue fee record.

Optionally, the parking environment is in an open parking lot.

Optionally, the blockchain node further includes an overdue fee record related to the vehicle published by a second blockchain node, and the second blockchain node corresponds to another parking fee collection system different from the parking fee collection system.

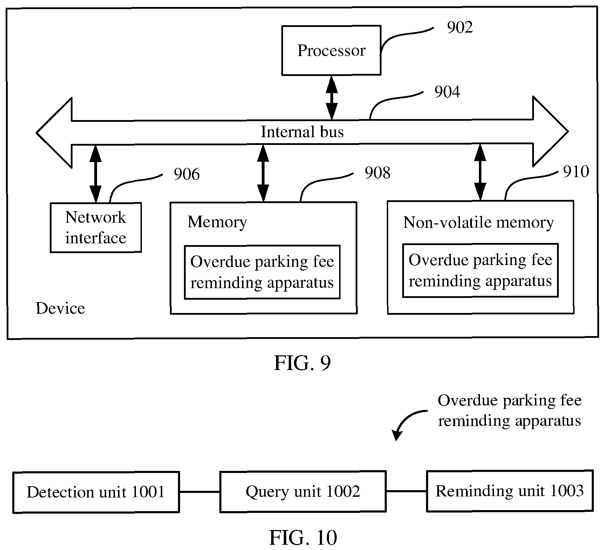

FIG. 9 is a schematic structural diagram illustrating a device, according to an example embodiment. Referring to FIG. 9, in terms of hardware, the device includes a processor 902, an internal bus 904, a network interface 906, a memory 908, and a non-volatile memory 910. Certainly, the device may further include hardware needed by another service. The processor 902 reads a corresponding computer program from the non-volatile memory 910 to the memory 908 for running, so as to logically form an overdue parking fee reminding apparatus. Certainly, in addition to a software implementation, one or more embodiments of the present specification do not exclude another implementation, such as a logical component or a combination of software and hardware. In other words, an execution body of the following processing procedure is not limited to each logical unit, and can also be hardware or a logical component.

Referring to FIG. 10, in a software implementation, the overdue parking fee reminding apparatus is applied to a parking fee collection system. The apparatus can include: a detection unit 1001, configured to detect parking information of a vehicle in a parking environment by using an IoT device associated with the parking fee collection system; a query unit 1002, configured to query about an unresolved overdue fee record related to the vehicle in a blockchain network when the parking information indicates that the vehicle enters the parking environment, where a publisher of the overdue fee record includes at least one of the following: a first blockchain node corresponding to the parking fee collection system, and a second blockchain node corresponding to another parking fee collection system different from the parking fee collection system; and a reminding unit 1003, configured to send an overdue fee reminder to a handheld fee collection terminal device used by a collection employee when the unresolved overdue fee record related to the vehicle is retrieved in the blockchain network.

The system, apparatus, module, or unit illustrated in the previous embodiments can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

In a typical configuration, a computer includes one or more processors (CPU), an input/output interface, a network interface, and a memory.

The memory may include a non-persistent memory, a random access memory (RAM), a non-volatile memory, and/or another form that are in a computer readable medium, for example, a read-only memory (ROM) or a flash memory (flash RAM). The memory is an example of the computer readable medium.

The computer readable medium includes persistent, non-persistent, movable, and unmovable media that can store information by using any method or technology. The information can be a computer readable instruction, a data structure, a program module, or other data. Examples of a computer storage medium include but are not limited to a phase change random access memory (PRAM), a static random access memory (SRAM), a dynamic random access memory (DRAM), a random access memory of another type, a read-only memory (ROM), an electrically erasable programmable read-only memory (EEPROM), a flash memory or another memory technology, a compact disc read-only memory (CD-ROM), a digital versatile disc (DVD) or another optical storage, a cassette tape, a magnetic disk storage, a quantum memory, a storage medium based on grapheme, another magnetic storage device, or any other non-transmission medium. The computer storage medium can be used to store information that can be accessed by the computing device. Based on the definition in the present specification, the computer readable medium does not include transitory media such as a modulated data signal and carrier.

It is worthwhile to further note that, the terms "include", "contain", or their any other variants are intended to cover a non-exclusive inclusion, so a process, a method, a product or a device that includes a list of elements not only includes those elements but also includes other elements which are not expressly listed, or further includes elements inherent to such process, method, product or device. Without more constraints, an element preceded by "includes a" does not preclude the existence of additional identical elements in the process, method, product or device that includes the element.

Specific embodiments of the present application are described above. Other embodiments fall within the scope of the appended claims. In some situations, the actions or steps described in the claims can be performed in an order different from the order in the embodiments and the desired results can still be achieved. In addition, the process depicted in the accompanying drawings does not necessarily require a particular execution order to achieve the desired results. In some implementations, multi-tasking and parallel processing can be advantageous.

Terms used in one or more embodiments of the present specification are merely used to describe specific embodiments, and are not intended to limit the one or more embodiments of the present specification. The terms "a" and "the" of singular forms used in one or more embodiments of the present specification and the appended claims are also intended to include plural forms, unless otherwise specified in the context clearly. It should be further understood that the term "and/or" used in the present specification indicates and includes any or all possible combinations of one or more associated listed items.

It should be understood that although terms "first", "second", "third", etc. can be used in one or more embodiments of the present specification to describe various types of information, but the information is not limited to these terms. These terms are only used to differentiate between information of the same type. For example, without departing from the scope of one or more embodiments of the present specification, first information can also be referred to as second information, and similarly, the second information can be referred to as the first information. Depending on the context, for example, the word "if" used here can be explained as "while", "when", or "in response to determining".

The previous descriptions are only example embodiments of one or more preferred embodiments of the present specification, but are not intended to limit the one or more embodiments of the present specification. Any modification, equivalent replacement, improvement, etc. made without departing from the spirit and principle of the one or more embodiments of the present specification shall fall within the protection scope of the one or more embodiments of the present specification.

## Claims

1. An overdue parking fee recordation method, applied to a parking fee collection system, wherein the method comprises:
detecting parking information of a vehicle in a parking environment by using an IoT device associated with the parking fee collection system;
determining parking fee payment information of the vehicle when the parking information indicates that the vehicle exits the parking environment; and
when the parking fee payment information indicates that fee payment for the vehicle is uncompleted, publishing an overdue fee record related to the vehicle to a blockchain network by using a first blockchain node corresponding to the parking fee collection system in the blockchain network.

2. The method according to claim 1, further comprising:
receiving a query request initiated for the vehicle by a handheld fee collection terminal device used by a collection employee; and
sending an overdue fee reminder to the handheld fee collection terminal device when an unresolved overdue fee record related to the vehicle is retrieved in the blockchain network.

3. The method according to claim 1, further comprising:
querying about an unresolved overdue fee record related to the vehicle in the blockchain network when the parking information indicates that the vehicle enters the parking environment; and
sending an overdue fee reminder to a handheld fee collection terminal device used by a collection employee when the unresolved overdue fee record related to the vehicle is retrieved in the blockchain network.

4. The method according to claim 1, further comprising:
querying about an unresolved overdue fee record related to the vehicle in the blockchain network when the IoT device detects a parking need of the vehicle for the parking environment; and
setting a barring facility in the parking environment to an enabled state to prevent the vehicle from entering the parking environment when a quantity of overdue fee records of the vehicle reaches a first quantity and/or an unpaid amount reaches a second quantity; otherwise, setting the barring facility to a disabled state to enable the vehicle to enter the parking environment.

5. The method according to claim 1, further comprising:
invoking a smart contract, wherein the smart contract is used to collect statistics on unresolved overdue fee records related to the vehicle in the blockchain network, setting a credit value of the vehicle based on a statistical result, and publishing the credit value of the vehicle to the blockchain network, wherein the credit value is negatively correlated with a quantity of overdue fee records and/or an unpaid amount.

6. The method according to claim 5, further comprising:
querying about the credit value of the vehicle when the IoT device detects a parking need of the vehicle for the parking environment; and
setting a barring facility in the parking environment to an enabled state to prevent the vehicle from entering the parking environment when the credit value of the vehicle is not greater than a predetermined value; otherwise, setting the barring facility to a disabled state to enable the vehicle to enter the parking environment.

7. The method according to claim 1, wherein the overdue fee record is marked as an unresolved state by default, and the method further comprises:
marking the overdue fee record as a resolved state upon receipt of a repaid fee related to the overdue fee record.

8. The method according to claim 1, wherein the parking environment is in an open parking lot.

9. The method according to claim 1, wherein the blockchain node further comprises an overdue fee record related to the vehicle that is published by a second blockchain node, and the second blockchain node corresponds to another parking fee collection system different from the parking fee collection system.

10. An overdue parking fee reminding method, applied to a parking fee collection system, wherein the method comprises:
detecting parking information of a vehicle in a parking environment by using an IoT device associated with the parking fee collection system;
querying about an unresolved overdue fee record related to the vehicle in a blockchain network when the parking information indicates that the vehicle enters the parking environment, wherein a publisher of the overdue fee record comprises at least one of the following: a first blockchain node corresponding to the parking fee collection system, and a second blockchain node corresponding to another parking fee collection system different from the parking fee collection system; and
sending an overdue fee reminder to a handheld fee collection terminal device used by a collection employee when the unresolved overdue fee record related to the vehicle is retrieved in the blockchain network.

11. An overdue parking fee recordation apparatus, applied to a parking fee collection system, wherein the apparatus comprises:
a detection unit, configured to detect parking information of a vehicle in a parking environment by using an IoT device associated with the parking fee collection system;
a determining unit, configured to determine parking fee payment information of the vehicle when the parking information indicates that the vehicle exits the parking environment; and
a publishing unit, configured to: when the parking fee payment information indicates that fee payment for the vehicle is uncompleted, publish an overdue fee record related to the vehicle to a blockchain network by using a first blockchain node corresponding to the parking fee collection system in the blockchain network.

12. The apparatus according to claim 11, further comprising:
a receiving unit, configured to receive a query request initiated for the vehicle by a handheld fee collection terminal device used by a collection employee; and
a first sending unit, configured to send an overdue fee reminder to the handheld fee collection terminal device when an unresolved overdue fee record related to the vehicle is retrieved in the blockchain network.

13. The apparatus according to claim 11, further comprising:
a first query unit, configured to query about an unresolved overdue fee record related to the vehicle in the blockchain node when the parking information indicates that the vehicle enters the parking environment; and
a second sending unit, configured to send an overdue fee reminder to a handheld fee collection terminal device used by a collection employee when the unresolved overdue fee record related to the vehicle is retrieved in the blockchain network.

14. The apparatus according to claim 11, further comprising:
a second query unit, configured to query about an unresolved overdue fee record related to the vehicle in the blockchain node when the IoT device detects a parking need of the vehicle for the parking environment; and
a first setting unit, configured to: set a barring facility in the parking environment to an enabled state to prevent the vehicle from entering the parking environment when a quantity of overdue fee records of the vehicle reaches a first quantity and/or an unpaid amount reaches a second quantity; otherwise, set the barring facility to a disabled state to enable the vehicle to enter the parking environment.

15. The apparatus according to claim 11, further comprising:
an invoking unit, configured to: invoke a smart contract, wherein the smart contract is used to collect statistics on unresolved overdue fee records related to the vehicle in the blockchain network, set a credit value of the vehicle based on a statistical result, and publish the credit value of the vehicle to the blockchain network, wherein the credit value is negatively correlated with a quantity of overdue fee records and/or an unpaid amount.

16. The apparatus according to claim 15, further comprising:
a third query unit, configured to query about the credit value of the vehicle when the IoT device detects a parking need of the vehicle for the parking environment; and
a second setting unit, configured to set a barring facility in the parking environment to an enabled state to prevent the vehicle from entering the parking environment when the credit value of the vehicle is not greater than a predetermined value; otherwise, set the barring facility to a disabled state to enable the vehicle to enter the parking environment.

17. The apparatus according to claim 11, wherein the overdue fee record is marked as an unresolved state by default, and the apparatus further comprises:
a marking unit, configured to mark the overdue fee record as a resolved state upon receipt of a repaid fee related to the overdue fee record.

18. The apparatus according to claim 11, wherein the parking environment is in an open parking lot.

19. The apparatus according to claim 11, wherein the blockchain node further comprises an overdue fee record related to the vehicle that is published by a second blockchain node, and the second blockchain node corresponds to another parking fee collection system different from the parking fee collection system.

20. An overdue parking fee reminding apparatus, applied to a parking fee collection system, wherein the apparatus comprises:
a detection unit, configured to detect parking information of a vehicle in a parking environment by using an IoT device associated with the parking fee collection system;
a query unit, configured to query about an unresolved overdue fee record related to the vehicle in a blockchain network when the parking information indicates that the vehicle enters the parking environment, wherein a publisher of the overdue fee record comprises at least one of the following: a first blockchain node corresponding to the parking fee collection system, and a second blockchain node corresponding to another parking fee collection system different from the parking fee collection system; and
a reminding unit, configured to send an overdue fee reminder to a handheld fee collection terminal device used by a collection employee when the unresolved overdue fee record related to the vehicle is retrieved in the blockchain network.

21. An electronic device, comprising:
a processor; and
a memory, configured to store an instruction that can be executed by the processor; wherein
the processor runs the executable instruction to implement the method according any of claims 1 to 10.
